# EUROPEAN PATENT SPECIFICATION

(11) **EP 1 467 332 B1**
(45) Date of publication and mention of the grant of the patent: **30.08.2006**
(21) Application number: 03007872.9
(22) Date of filing: 07.04.2003
(51) Int. Cl.: G08B 15/00

(54) **Video surveillance system and method**
Videoüberwachungssystem und -methode
Procédé et système de surveillance par vidéo

(43) Date of publication of application: 13.10.2004
(73) Proprietor: Chang, Chao-Hung, Taichung (TW)
(72) Inventor: Chang, Chao-Hung, Taichung (TW)
(74) Representative: Kaminski, Susanne

(56) References cited:
- EP-A- 0 878 965
- EP-A- 0 967 584
- US-B1- 6 215 519

## Description

### BACKGROUND OF THE INVENTION

### Field of the Invention

The present invention relates to an active video surveillance system and active video surveillance method therefore, and more particularly to an active video surveillance system and active video surveillance method therefore in which a moving target can be identified automatically and the enlarged image of a specific moving target can be taken so as to enhance the definition and identification capability.

### Description of the prior art

In public buildings, shopping malls, convenience stores, banks or even houses, a security video surveillance system with fixed, or passive video cameras is very common. The video camera is capable of monitoring and recording people, vehicle or the like whose (or which) come and go within a specific area by a wide-angle lens provided to the video camera. When an accident happened or a crime is committed, or some specific needs occurred, the video tapes or other recording media recorded everything that happened by a video camera can be retrieved and reviewed so as to identify the recorded image or to prosecute one's criminal acts.

However, when the conventional video surveillance system is used, since the video camera of the video surveillance system is merely recording fixed wide-angle images within a specific area with a wide-angle lens, the images of the specific moving target recorded on the video tapes or other recording media tend to be small and blurred and are often can't be identified clearly. In particular, when the recorded wide-angle images are too complicated to identify in details, the purpose of surveillance and recording thereof will be hard to satisfy.

Furthermore, although there are some countries own the technology for enhancing images so as to analyze and identify the images, but such technology is not available to all countries. For some serious crimes, one country might ask other countries which own that kind of technology for providing assistance to analyze the needed images. However, it takes time for communication and analysis and may not be able to break the case in a timely manner. Also, it is impossible for the general public to ask for this kind of assistance. Besides, the technology for enhancing images is not omnipotent and can provide only limited improvement.

Moreover, since the conventional video surveillance system is unable to control the definition of the recorded images and is not capable of enlarging the image of the specific target, the blurred image will be very hard to identify and therefore criminals may keep a distance from the video camera and thus making the images even more blurred.

Therefore, it is necessary to solve the problem that how to improve the definition of specific targets within a video surveillance area so as the targets can be identified clearly and effectively.

### SUMMARY OF THE INVENTION

It is therefore the inventor has developed an active video surveillance system and active video surveillance method therefore for solving the above-mentioned problems and drawbacks. The primary objective of the present invention is to provide an active video surveillance system wherein the active video surveillance system is able to identify the moving targets automatically and to aim at the specific moving targets for taking the enlarged image signals so as to improve the definition and identification capability.

Another objective of the present invention is to provide an active video surveillance method for obtaining the above-mentioned objective.

Still another objective of the present invention is to provide a technology feature, which is able to provide enlarged images and prolong the operational life of a moving video camera device.

To achieve the above and other objectives, the present invention can achieve as follows:

An active video surveillance system comprising:
a first image-taking device, such as a video camera, which is continuously taking the wide-angle image signals within the surveillance area;
a processing device which is continuously comparing the latest and the second latest wide-angle image signals and moving targets are identified when differences are found;
a second image-taking device which is controlled by the processing device and is used for taking the enlarged image signals of the moving targets; and
a recording unit, which is connected to the above-mentioned devices and is continuously recording the wide-angle image signals and the enlarged image signals.

By using the above-mentioned design, the active video surveillance system can identify and aim at a specific target, take the enlarged image signals of the target and record thereof so as to enhance the definition and identification capability.

The recording unit comprises a first recording device and a second recording device for recording the wide-angle image signals and the enlarged image signals respectively. The recording unit further comprises either one display device for displaying the wide-angle image signals and the enlarged image signals simultaneously or two display devices for displaying the wide-angle image signals and the enlarged image signals respectively.

Moreover, the first image-taking device is a fixed wide-angle video camera and the second image-taking device is a movable telescopic video camera, which is composed by providing a movable reflecting device in the front of a fixed telescopic video camera. The movable reflecting device comprises a reflecting mirror, a longitudinal driver, and a transverse driver wherein all three are connected to a base by a fulcrum.

An active video surveillance method of the present invention including the steps:
providing a first image-taking device for continuously taking the wide-angle image signals within the surveillance area;
employing a processing device for continuously comparing the latest and the second latest wide-angle image signals and moving targets are identified when differences are found;
moving a second image-taking device for taking the enlarged image signals of the moving targets; and
recording the said wide-angle image signals and the said enlarged image signals into a recording unit.

The recording unit is continuously recording the wide-angle image signals and the enlarged image signals. The recording unit is further displaying the wide-angle image signals and the enlarged image signals with either one display device simultaneously or two display devices respectively.

Moreover, a fixed wide-angle video camera is used in the present invention for continuously taking the wide-angle image signals within the surveillance area. A movable telescopic video camera is provided for taking the enlarged image signals of a moving target wherein a movable reflecting device is provided in the front of a fixed telescopic video camera so as to take the enlarged image signals.

The present invention is not limited by the amount of the image-taking devices to be two image-taking devices for taking the wide-angle image signals and the enlarged image signals respectively. The present invention i's able to use only one image-taking device equipped with zoom lenses act as wide-angle video camera as well as telescopic video camera working in time intervals. Therefore, the present invention is able to achieve as follows:

An active video surveillance system comprising:
an image-taking device, such as a video camera equipped with zoom lenses, which is taking the wide-angle image signals within the surveillance area at specific time intervals and is also taking the enlarged image signals of the moving targets under control;
a processing device which is continuously comparing the latest and the second latest wide-angle image signals and moving targets are identified when differences are found and, change the image-taking device to telescopic lenses and take the enlarged image signals of the moving target; and
a recording unit, which is connected to the above-mentioned devices and is continuously recording the wide-angle image signals and the enlarged image signals.

By using the above-mentioned design, the video surveillance system is able to aim at a specific moving target for taking the enlarged image signals and recording thereof so as to enhance the definition and identification capability.

The image-taking device is a movable video camera with zoom lenses, which is composed by providing a movable reflecting device in the front of a fixed video camera with zoom lenses. The movable reflecting device comprises a reflecting mirror, a longitudinal driver, and a transverse driver wherein all three are connected to a base.

An active video surveillance method of the present invention including the steps:
providing an image-taking device for continuously taking the wide-angle image signals within the surveillance area;
employing a processing device for continuously comparing the latest and the second latest wide-angle image signals and moving targets are identified when differences are found;
moving the said image-taking device for taking the enlarged image signals of the moving targets; and
recording the said wide-angle image signals and the said enlarged image signals into a recording unit.

The recording unit is recording the wide-angle image signals and the enlarged image signals respectively. The recording unit is further displaying the wide-angle image signals and the enlarged image signals with either one display device simultaneously or two display devices respectively.

Moreover, a movable video camera with zoom lenses is provided for taking the wide-angle image signals within the surveillance area and the enlarged image signals of the moving targets wherein a movable reflecting device is provided in the front of a fixed video camera with zoom lenses so as to take the wide-angle image signals and the enlarged image signals.

### BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein:
Fig. 1 is the system block diagram of the present invention;
Fig. 2 is a schematic view illustrating the action of a movable telescopic video camera of the present invention;
Fig. 3 shows a schematic exploded view of Fig. 2;
Fig. 4 shows another schematic exploded view of Fig. 2;
Fig. 5 is the flow chart diagram of present invention;
Fig. 6 is a schematic view illustrating that the first image-taking device of the present invention is taking the wide-angle image signals;
Fig. 7 is a schematic view illustrating that the second image-taking device of the present invention is taking the enlarged image signals of specific moving target;
Fig. 8 is a schematic view illustrating the example process of determining the moving target according to the present invention;
Fig. 9 is a schematic view illustrating another example process of determining the moving target according to the present invention; and
Fig. 10 is a schematic view illustrating yet another example process of determining the moving target according to the present invention.

### DETAILED DESCRIPTION OF THE PREFERRED EMBODIMENTS

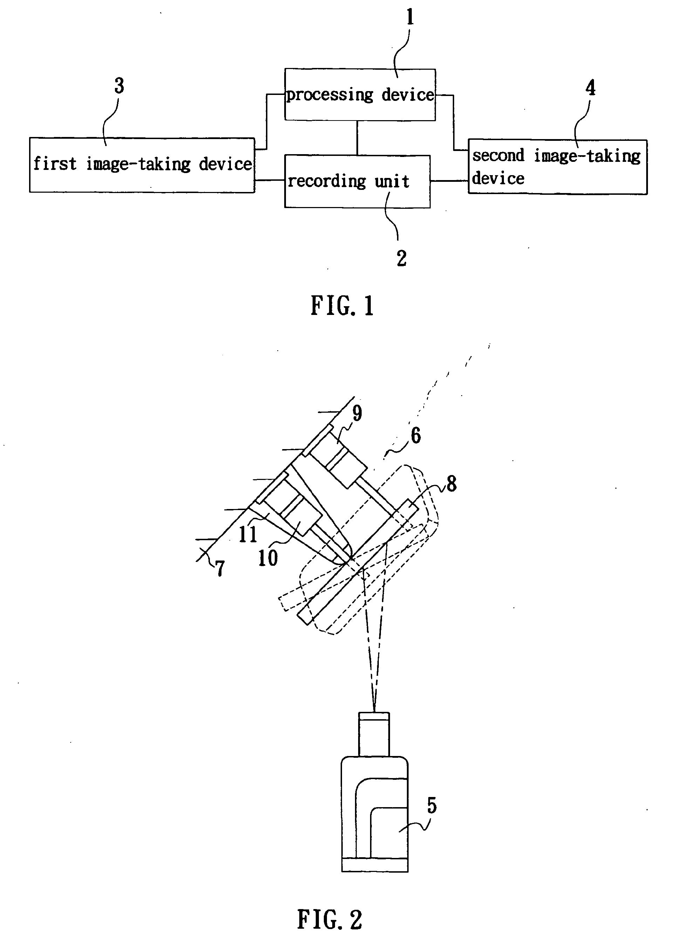

Please refer to Fig. 1 that shows a system block diagram of the present invention. As shown, an active video surveillance system of the present invention comprises a processing device 1, a recording unit 2, a first image-taking device 3, and a second image-taking device 4.

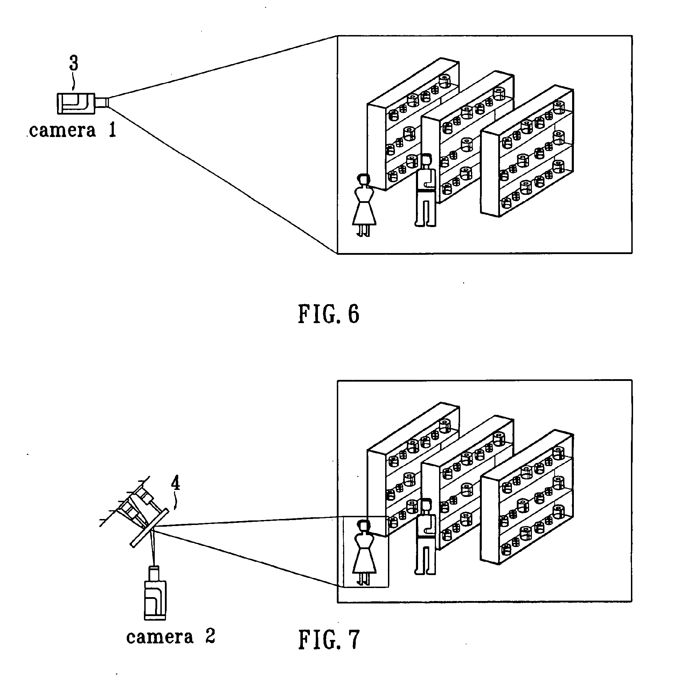

The first image-taking device may be a fixed wide-angle video camera (as shown in Fig. 6) for taking the wide-angle images within the surveillance area in a fixed direction thereof. The processing device 1 may be a computer or a processor in which a processing program is existed and is used for continuously comparing the latest and the second latest wide-angle image signals and moving targets are identified when differences are found. The second image-taking device 4 may be a movable telescopic video camera (as shown in Fig. 7) and is controlled by the processing device 1 for taking the enlarged image signals of the moving targets. The recording unit 2 may be a hard disc or memory of the computer or other recording media. The recording unit 2 is connected to the above-mentioned devices and is continuously recording the wide-angle image signals and the enlarged image signals.

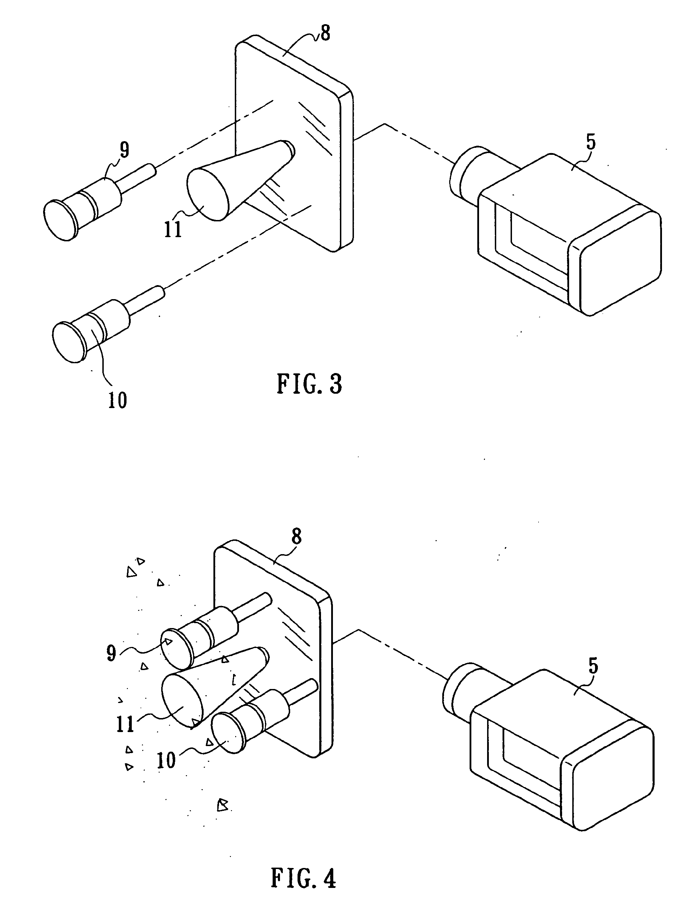

The said movable telescopic video camera (please refer to Fig. 2) is composed of a movable reflecting device 6 in the front of a fixed telescopic video camera 5. The movable reflecting device 6 (please refer to Fig.2, 3, and 4) comprises a base 7, a reflecting mirror 8, a longitudinal driver 9, and a transverse driver 10 wherein the reflecting mirror 8 is connected to the base 7 by engaging a rotate-able fulcrum 11. And, the longitudinal driver 9, and the transverse driver 10 are connected to the base 7 by arranging for a angle of 90 degrees, but not limited to be exactly 90 degrees, other angle may work as well, relative to the fulcrum 11 and the front ends thereof are connected to the corresponding back of the reflecting mirror 8 respectively. By using such design, an image-taking direction of the fixed telescopic video camera 5 can be changed by producing a reflecting angle to pivot the reflecting mirror 8 correspondingly through the control of the longitudinal driver 9 and the transverse driver 10.

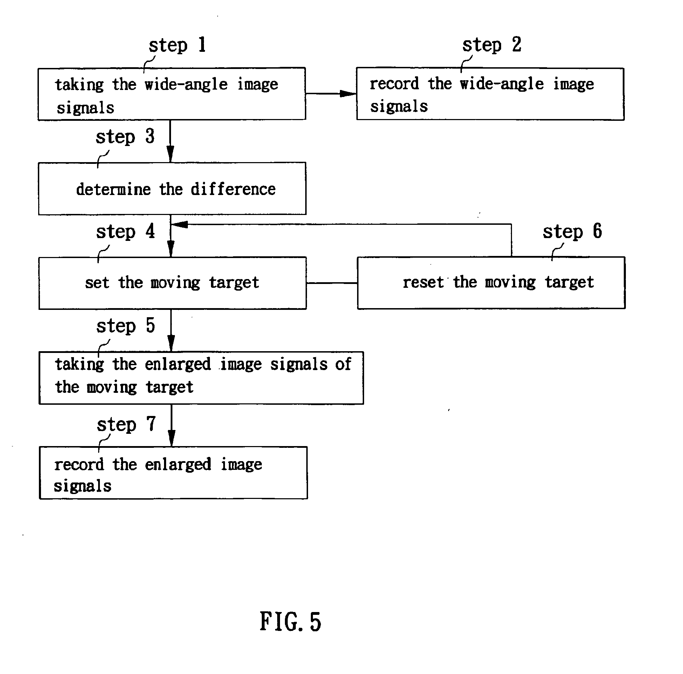

An active video surveillance system of the present invention mainly comprises the following steps (please refer to Fig. 5):
Step 1. taking the wide-angle image signals continuously: which is employed the first image-taking device 3 (such as a fixed wide-angle video camera) so as to continuously taking the wide-angle image signals within the fixed surveillance area direction;
Step 2. record the wide-angle image signals: which is continuously recording the wide-angle image signals into the recording unit 2 (such as a hard disc);
Step 3. determine the difference: which is continuously comparing the latest and the second latest wide-angle image signals by the processing device 1 (such as a computer);
Step 4. set the moving target: when the difference is found from the comparing result, the difference is comparing with the previous record for determining the latest difference and setting the latest moving target;
Step 5.taking the enlarged image signals of the moving targets: after the direction of the moving target is defined by the processing device 1, the second image-taking device 4 (such as a movable telescopic video camera) is redirected to take the enlarged image signals of the moving targets;
Step 6. reset the moving target: reset the moving target by registering the latest location of the moving target in the processing device 1. And
Step 7. record the enlarged image signal: which is recording the said enlarged image signals into a recording unit 2.

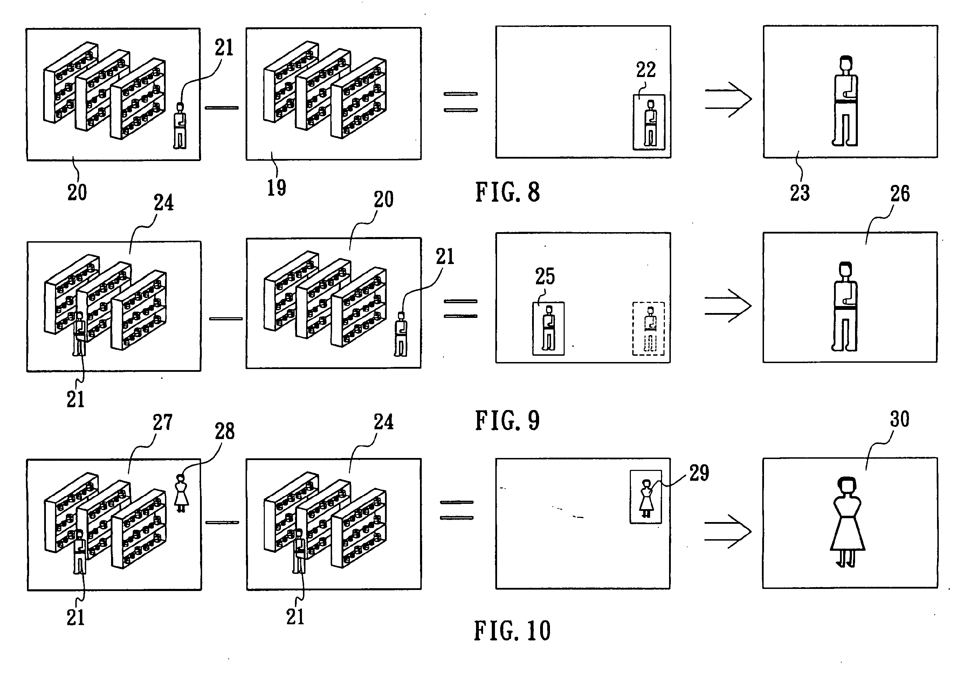

In the above-mentioned step, the process of determining the difference for setting the moving targets may use digital image processing technology. Please refer to Fig. 8 in which the first wide-angle image signal 19 shows no one is present. Next, a person A 21 appeared in a second wide-angle image signal 20. A difference is thus found and is decided to be the person A 21. Then this difference is compared to the preceding moving target for ascertaining that this difference is the latest difference. Thus, the person A 21 is set to be a moving target 22 and the enlarged image signals 23 thereof is taken immediately. Please refer to Fig. 9 in which the person A 21 within a third wide-angle image signal 24 has left the original position. At this point of time, contrast the third wide-angle image signal 24 with the second wide-angle image signal 20 and found these two differences (i.e. the left position and the right position) that the person A 21 has appeared respectively. Then contrast these two differences with the preceding moving target 22 for ascertaining that the left position is the latest difference. Thus, the person A 21 at the left position is set to be a moving target 25 and the enlarged image signals 26 thereof is taken immediately. Please refer to Fig. 10 in which the person A 21 within a fourth wide-angle image signal 27 did not move but a person B 28 has entered. At this point of time, contrast the fourth wide-angle image signal 27 with the third wide-angle image signal 24 and found the difference should be the person B 28. Then contrast the differences with the preceding moving target 25 for ascertaining that the right position is the latest difference. Thus, the person B 28 is set to be a moving target 29 and the enlarged image signals 30 thereof is taken immediately.

Further, the said recording unit 2 is able to continuously recording the wide-angle image signals and the enlarged image signals; both signals can be identified and retrieved by software. Certainly, two recording devices (such as two hard discs) may also be used for recording the wide-angle image signals and the enlarged image signals respectively.

Further, the active video surveillance system of the present invention comprises a display device for displaying the wide-angle image signals and the enlarged image signals continuously. Certainly, two display devices may also be used for displaying the wide-angle image signals and the enlarged image signals respectively.

Since the first image-taking device 3 can continuously taking the wide-angle image signals within the fixed surveillance area direction, a fixed wide-angle video camera can be used therefore. The second image-taking device 4, which is necessary to move and take the enlarged image signals of moving targets, so a movable telescopic video camera can be used therefore. However, the conventional movable video camera is composed of a video camera and a universal moving base. Such movable video camera is not only very expensive but is also bulky and heavy, and the maintenance cost is high. Therefore, in the present invention, the movable reflecting device 6 is provided in the front of the fixed telescopic video camera 5 so as to form a movable telescopic video camera. The movable reflecting device comprises a reflecting mirror 8, a longitudinal driver 9, and a transverse driver 10 wherein all three are connected to a base. Since the movable reflecting device 6 is separated from the fixed telescopic video camera 5 and the configuration of the movable reflecting device 6 is light, simple, compact, and cost-effective, so as to minimize the production cost and the maintenance cost of the movable reflecting device. This makes a big breakthrough.

As stated above, the present invention is employing two image-taking devices, one processing unit and a recording unit, and is able to aim at any moving target within the surveillance area so as to take the enlarged image thereof and store the enlarged image in reserve. Such enlarged image can enhance the definition and identification capability of the moving target.

The technology of the present invention is not limited to the using of the said two image-taking devices. The present invention can also use only one movable video camera with zoom lenses to take the fixed wide -angle image signals and enlarged image signals in time interval. Since such modification is only the change of the amount of the image-taking device, the video camera processes and procedures is similar to the above disclosure, therefore it will not repeat again herein.

As stated in the detailed description of the said preferred embodiment, the active video surveillance system and video surveillance method therefore of the present invention can aim at any moving target within surveillance area so as to take the enlarged images of moving targets thereof and store the enlarged images in reserve. Such enlarged images will be able to enhance the definition and identification capability of the moving targets and thus the purposes of surveillance and recording can definitely be strengthened. It is obvious that the present invention has overcome the problems and drawbacks of the prior art by the above-mentioned design.

The present invention has described with preferred embodiments thereof and it is understood that many changes and modifications in the described embodiment can be carried out without departing from the scope as defined by the appended claims.

## Claims

1. An active video surveillance system comprising:
a first image-taking device continuously taking wide-angle image signals within a surveillance area; a processing device continuously comparing a first latest
wide-angle image signal and a second one and moving targets being identified when differences being found; a second image-taking device controlled by said processing
device and used for taking enlarged image signals of the moving targets; and
a recording unit connected to said above-mentioned devices and continuously recording the wide-angle image signals and the enlarged image signals; which is **characterized in that**
said second image-taking device being a movable telescopic video camera, which being composed by providing a movable reflecting device in the front of a fixed telescopic video camera, wherein said movable reflecting device comprising a reflecting mirror, a longitudinal driver, and a transverse driver in which all three being connected to a base by a fulcrum.

2. An active video surveillance system comprising:
an image-taking device taking wide-angle image signals within a surveillance area and enlarged image signals of moving targets under control at specific time intervals respectively;
a processing device continuously comparing a first latest wide-angle image signal and a second one and moving targets being identified when differences being found and, changing said image-taking device to telescopic lenses and taking the enlarged image signals of the moving targets; and
a recording unit connected to said above-mentioned devices and continuously recording the wide-angle image signals and the enlarged image signals, which is **characterized in that**
said image-taking device being a movable video camera with zoom lenses, which being composed by providing a movable reflecting device in the front of a fixed video camera with zoom lenses, wherein said movable reflecting device comprising a reflecting mirror, a longitudinal driver, and a transverse driver in which all three being connected to a base by a fulcrum.

## Patentansprüche

1. Aktives Videoüberwachungssystem, umfassend:
eine erste Bildaufnahmevorrichtung, die Weitwinkelbildsignale innerhalb eines Überwachungsbereichs kontinuierlich aufnimmt;
eine Verarbeitungsvorrichtung, die ein jüngstes Weitwinkelbildsignal mit einem zweitjüngsten vergleicht und sich bewegende Ziele identifiziert, wenn Unterschiede aufgefunden werden;
eine zweite Bildaufnahmevorrichtung, die durch die Verarbeitungsvorrichtung gesteuert und verwendet wird, um Signale vergrösserter Bilder der sich bewegenden Ziele aufzunehmen; und
eine mit den oben erwähnten Vorrichtungen verbundene Aufzeichnungseinheit, die die Weitwinkelbildsignale und die Signale vergrösserter Bilder kontinuierlich aufzeichnet; welches **dadurch gekennzeichnet ist, dass**
die zweite Bildaufnahmevorrichtung eine bewegbare teleskopische Videokamera ist, die so aufgebaut ist, dass eine bewegbare Spiegelvorrichtung vor einer ortsfesten Videokamera angebracht ist, wobei die bewegbare Spielgelvorrichtung einen reflektierenden Spiegel, einen Längsantrieb und einen Querantrieb umfasst, die alle drei durch eine Stütze mit einer Basis verbunden sind.

2. Aktives Videoüberwachungssystem, umfassend:
eine Bildaufnahmevorrichtung, die Weitwinkelbildsignale innerhalb eines Überwachungsbereichs bzw. Signale vergrösserter Bilder sich bewegender Ziele gesteuert zu bestimmten Zeitintervallen aufnimmt;
eine Verarbeitungsvorrichtung, die ein jüngstes Weitwinkelbildsignal mit einem zweitjüngsten vergleicht und sich bewegende Ziele identifiziert, wenn Unterschiede aufgefunden werden, und die die Bildaufnahmevorrichtung mit Teleskoplinsen vertauscht und Signale vergrösserter Bilder des sich bewegenden Ziels aufnimmt; und
eine mit den oben erwähnten Vorrichtungen verbundene Aufzeichnungseinheit, die die Weitwinkelbildsignale und die Signale vergrösserter Bilder kontinuierlich aufzeichnet, welches **dadurch gekennzeichnet ist, dass**
die Bildaufnahmevorrichtung eine bewegbare Videokamera mit Zoomlinsen ist, die so aufgebaut ist, dass eine bewegbare Spiegelvorrichtung vor einer ortsfesten Videokamera mit Zoomlinsen angebracht ist, wobei die bewegbare Spielgelvorrichtung einen reflektierenden Spiegel, einen Längsantrieb und einen Querantrieb umfasst, die alle drei durch eine Stütze mit einer Basis verbunden sind.

## Revendications

1. Un système de surveillance par vidéo active, comprenant :
un premier dispositif de prise d'images, prenant en continu des signaux d'image grand angle dans une zone de surveillance ;
un dispositif de traitement, comparant en continu un premier signal d'image grand angle le plus tardif et un deuxième, et des cibles mobiles étant identifiées lorsque des différences sont trouvées ;
un deuxième dispositif de prise d'images, commandé par ledit dispositif de traitement et utilisé pour prendre des signaux d'images agrandies des cibles en déplacement ; et
une unité d'enregistrement, connectée auxdits dispositifs mentionnés ci-dessus et enregistrant en continu les signaux d'image grand angle et les signaux d'images agrandies, **caractérisé en ce que**
ledit deuxième dispositif de prise d'images est une caméra vidéo télescopique mobile, composée en disposant un dispositif réfléchissant mobile à l'avant d'une caméra vidéo télescopique fixe, dans lequel ledit dispositif réfléchissant mobile comprend un miroir réfléchissant, un actionneur longitudinal et un actionneur transversal, qui sont tous trois connectés à une base par un point d'articulation.

2. Un système de surveillance vidéo active, comprenant :
un dispositif de prise d'images, prenant des signaux d'image grand angle dans une zone de surveillance et des signaux d'images agrandies de cibles en déplacement, sous une commande, à des intervalles de temps respectifs, respectivement ;
un dispositif de traitement, comparant de façon continue un premier signal d'image grand angle le plus tardif et un deuxième, et des cibles en déplacement étant identifiées lorsque des différences sont trouvées, et en modifiant les caractéristiques dudit dispositif de prise d'images grâce à des lentilles télescopiques et en prenant les signaux d'images agrandies des cibles en déplacement, et
une unité d'enregistrement, connectée auxdits dispositifs mentionnés ci-dessus et enregistrant en continu les signaux d'image grand angle et les signaux d'image agrandie, **caractérisé en ce que**
ledit dispositif de prise d'images est une caméra vidéo mobile munie de lentilles à focale variable, composée en fournissant un dispositif réfléchissant mobile placé à l'avant d'une caméra vidéo fixe et comprenant des lentilles à focale variable, dans lequel ledit dispositif réfléchissant mobile comprend un miroir réfléchissant, un actionneur longitudinal et un actionneur transversal, qui sont tous trois connectés à une base par un point d'articulation.
